# EUROPEAN PATENT SPECIFICATION

(11) **EP 2 432 648 B1**
(45) Date of publication and mention of the grant of the patent: **27.03.2013**
(21) Application number: 11718097.6
(22) Date of filing: 06.05.2011
(51) Int. Cl.: B43M 3/04, B65G 15/58, B65H 29/24, B65H 11/00

(54) **SUCTION BELT**
ABSAUGBAND
COURROIE À ASPIRATION

(30) Priority: 07.05.2010 US 332338 P; 07.05.2010 EP 10162320
(43) Date of publication of application: 28.03.2012
(73) Proprietor: BÖWE SYSTEC GmbH, 86159 Augsburg (DE)
(72) Inventor: BATZER, Joseph, 86391 Leitershofen (DE); HUBER, Thomas, 86391 Stadtbergen (DE); FÖRG, Helmut, 86845 Großaitingen (DE); HÖPNER, Bernd, 86159 Augsburg (DE); SEILER, Reinhard, 86447 Aindling (DE); CELESTE, Ronald, 86707 Kühlenthal (DE)
(74) Representative: Zimmermann, Tankred Klaus
(86) International application number: PCT/EP2011/057318
(87) International publication number: WO 2011/138439

(56) References cited:
- GB-A- 2 264 279
- JP-A- 5 107 968
- JP-A- 2002 137 840
- JP-A- 2007 008 598
- JP-U- H0 446 039
- US-A- 3 861 669
- US-A1- 2003 128 253

## Description

Embodiments of the invention relate to a suction belt, more specifically to a suction belt for conveying an object.

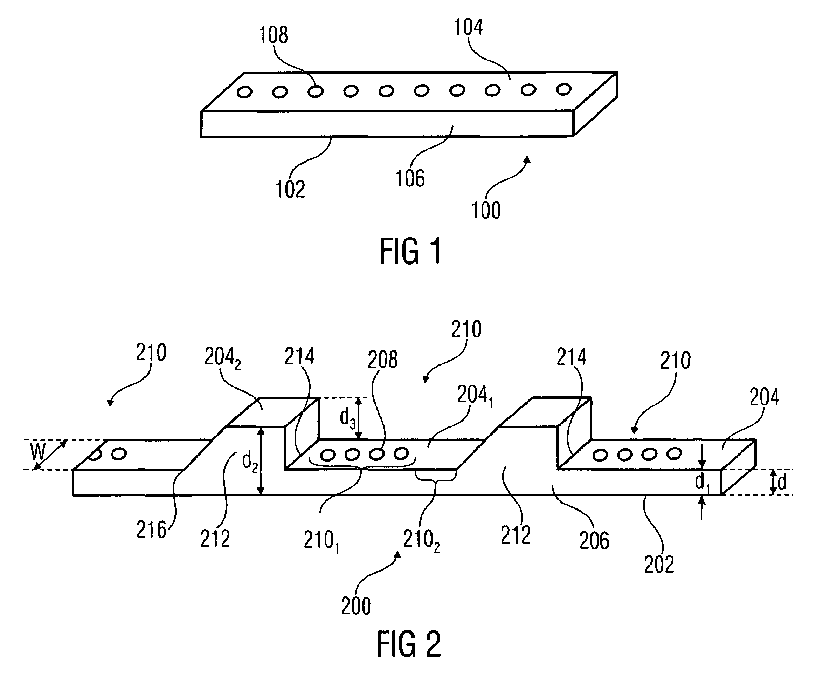

Suction belts are known in the art and may be used in a paper handling apparatus, e.g. an inserter, a assembly station, a merger, for conveying goods, e.g. one or more sheets of paper, one or more envelopes, one or more inserts. Fig. 1 shows a portion of a conventional suction belt which may be formed from a plastic or rubber material and comprises a lower surface or bottom side 102 and an upper surface or top side 104 opposite to the bottom side 102. Further, the belt 100 comprises opposing side faces 106 connecting the bottom side 102 and the top side 104 and one or more (a plurality of) holes or vias 108. Each hole 108 extends through the body of the suction belt 100 from the bottom side 102 to the top side 104. The suction belt 100 may be used in a suction conveyer which comprises a vacuum chamber and a vacuum source operatively connected to the vacuum chamber. The suction belt 100, at least partially, extends over the vacuum chamber so that a suction force can be applied through the holes 108. When an object is to be transported by the conveyor it is placed on the top side 104 of the suction belt 100 and the vacuum source is activated, thereby applying a suction force through the holes 108 to the object. Thus, the object is held on the top side 104 of the suction belt 100 and is transported as the belt is moved.

In a paper handling apparatus there are situations when an additional object is to be added to an object already transported by the suction belt. In such a situation it is necessary to ensure that upon adding the additional object no collision occurs. Further, there are continuously operating inserters in which an envelope and the goods move during the inserting process. The envelope is moved with a velocity lower than the velocity of the goods to be inserted so that as the envelope and the goods travel in the same direction, eventually, the goods reach the envelope and are inserted. In such a case, it is to be ensured that the goods securely cross the flap of the envelope. When a conventional suction belt is used, additional elements are to be provided for avoiding the above mentioned collisions.

JP 2007 008598 A describes a paper post-treatment device hardly generating deterioration of an image even if the paper is delivered faster than a speed at a conveying belt side or the paper is delivered slower than that when the image-formed paper is delivered by an image formation device of ink jet system. A plurality of projection parts are formed on a surface of the conveying belt. Since the plurality of projection parts support the paper when the conveying belt conveys the paper, a contact area of the paper is reduced.

JP 5 107968 A describes a device wherein paper is pressurized to a surface of a belt by having a vacuum chamber combined with a belt member provided with sucking holes in a carrying belt device placed between a photosensitive drum and a fixing device. In the belt member projected lines are placed on top of a belt main body with an interval between them.

JP H04 46039 U describes a belt for transporting sheet-like elements, wherein the belt has a plurality of projections.

US 2003/128253 A1 describes a printer comprising a transportation belt, a printer head, and a pneumatic paper sucker. The transportation belt is driven by a driving roller that drives a driven roller. Print paper is adsorbed to the transportation belt by the sucker, and transported in a direction of transportation.

JP 2002 137840 A describes an endless belt for carrying sheets capable of preventing an object be carried from becoming dirty. In a belt main body, through-holes penetrating a thickness direction of the belt main body, and projecting portions projecting on a side of carrying face of the belt main body in a thickness direction are disposed.

US 3,861,669 A describes an apparatus for feeding or taking out sheet-like articles which comprises a vacuum suction device having a suction surface bored with suction openings, and an endless belt provided with a plurality of suction regions arranged at a prescribed interval so as to suck through suction holes of the suction regions sheet-like articles which contact the outer surface of the suction regions when the suction holes are brought over the suction openings of the suction surface of the vacuum suction device.

GB 2 264 279 A discloses an inserter wherein an envelope flap is held by a suction piece, so that during a filling process goods to be inserted into the envelope pass a wedge adjacent to the suction piece without colliding with the envelope flap.

It is an object underlying the present invention to provide an improved suction belt for conveying an object.

This object is achieved by a suction belt according to claim 1 and by a suction conveyer according to claim 13.

Embodiments of the invention are now described with regard to the accompanying drawings, in which:
- Fig. 1: shows a portion of a conventional suction belt,
- Fig. 2: shows an isometric view of a portion of a suction belt in accordance with embodiments of the invention,
- Fig. 3: shows a further embodiment of the suction belt having a different configuration of the second areas,
- Fig. 4: shows yet another embodiment of the suction belt in accordance with which the second area is arranged at a distance from the edges of the belt,
- Fig. 5: shows a suction belt in accordance with another embodiment, wherein Fig. 5(a) is a sectional view of taken along a line a-a' shown in Fig. 5(b) which is a top view of the belt,
- Fig. 6: shows a suction belt in accordance with yet another embodiment, wherein Fig. 6(a) is a sectional view taken along a line a-a' shown in Fig. 6(b) which is a top view of the belt,
- Fig. 7: shows in Fig. 7(a), 7(b) and 7(c) different shapes of the second area of the suction belt,
- Fig. 8: shows another embodiment of the suction belt, wherein Fig. 8(a) is a sectional view taken along lines a-a' in Fig. 8(b) which is a top view of the belt,

- Fig. 9: shows another embodiment of the suction belt;
- Fig. 10: shows yet another embodiment of the suction belt;
- Fig. 11: shows a suction conveyer using the suction belt in accordance with embodiments of the invention;
- Fig. 12: shows a schematic view of a section of an inserter comprising the suction conveyor of Fig. 11; and
- Fig. 13: shows a suction belt in accordance with further embodiments of the invention, wherein Fig. 13(a) is an isometric view of a part of the belt, and Fig. 13(b) is a sectional view along the line b-b' in Fig. 13(a).

Fig. 2 shows an isometric view of a portion of a suction belt 200 in accordance with embodiments of the invention. The suction belt 200 may be formed from a plastic or a rubber material and comprises a lower surface or bottom side 202 and an upper surface or top side 204. The bottom side 202 and the top side 204 are connected by opposing side faces 206. The suction belt 200 comprises at least two holes or vias 208 extending through the suction belt body between the bottom side 202 and the top side 204. A thickness d of the suction belt 200 is defined by the length or dimension between the bottom side 202 and the top side 204. The suction belt 200 comprises a plurality of first areas 210 and a plurality of second areas 212. The thickness d₁ of the first areas 210 differs from the thickness d₂ of the second areas 212. More specifically, at a first transition 214 between the second area 212 and the first area 210 the thickness d of the suction belt 200 changes from d₂ to d₁. Thus, there is a distance d₃ between the top surface 204₁ in the first area 210 and the top surface 204₂ in the second area 212. The height d₃ is equal to or higher than a thickness of an object held on the first area so that, e.g. an object travelling across the second area is lifted far enough above the object held on the belt to avoid a collision. In case of an inserter the height d₃ is selected to be equal to or higher than a thickness of an envelope flap so that goods to be inserted can securely pass the flap but still hits an envelope mouth of the opened envelope. In an assembly station the height (d₃) may be selected dependent from the maximum number of objects that can be assembled into a stack.

Thus, by means of a suction belt 200 as shown in Fig. 2, in accordance with embodiments of the invention, an apparatus for transporting an envelope in an inserter is provided, wherein the suction belt 200 comprises the first area or suction section 210 for holding an open flap of an envelope and at least a part of an envelope body, and wherein the second area 212 forms means for providing an elevation such that an open flap of the envelope can be arranged behind the elevation.

In the embodiment of Fig. 2, the second area 212 is a contoured section of the belt which is shaped as a ramp. At a second transition 216 between the first area 210 and the second area 212 the top side 204 of the belt 200 starts to rise or ascend linearly until the height d₃ is reached so that a first, upwardly rising part of the second area 212 is formed, followed by a second, horizontal part that extends to the first transition 216 where a third, vertical part is formed.

When using the suction belt for transporting one or more sheets of paper, e.g. a single sheet or a stack of sheets, one or more additional sheets can be placed on the stack without any collision because it is moved out of the plane 204₁ in which the sheet is held by the suction force, thereby allowing to cross the already held sheet. Also when inserting goods into an envelope held on the belt with its flap at the first transition 214, the goods can be moved securely into the envelope over the flap. In accordance with embodiments the second area 212 is an integral part of the suction belt 200, i.e. the first and second areas 210, 212 are formed from the same belt 200. Therefore, a fixed positional relationship between the two areas is ensured allowing for a secure and reliable operation.

In the embodiment of Fig. 2, the first area 210 comprises a plurality of holes 208 arranged at predefined intervals between two consecutive second areas 212. However, in accordance with other embodiments of the invention it is not necessary that the entire first area 210 between two second areas 212 is provided with holes, rather a first part 210₁ having the holes and a second part 210₂ having no holes may be provided. Also, it is noted that the second areas 212 in accordance with embodiments do not comprise any holes.

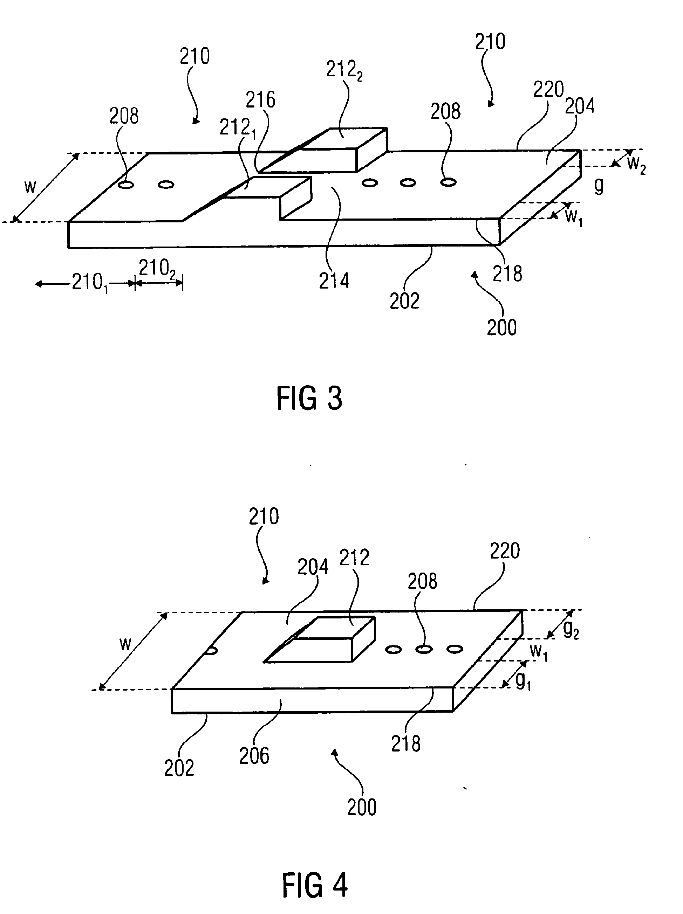

Fig. 2 shows a suction belt 200 having the second area 212 extending over the entire width w of the belt 200, however, the invention is not limited to such embodiments. Fig. 3 shows a further embodiment of the suction belt 200 having a different configuration of the second areas 212. The second area 212 is formed of two separate parts 212₁ and 212₂ each extending over only a part of the width w of the belt 200. More specifically, the first part 212₁ is arranged at a first edge 218 of the belt 200 and extends in the width direction w by a distance w₁ towards a second, opposing edge 220. The second part 212₂ extends from the second edge 220 in the width direction towards the first edge 218 by a distance w₂. Thus, the parts 212₁ and 212₂ are arranged with a gap g there between.

Fig. 4 shows yet another embodiment of the suction belt 200 in accordance with which the second area is arranged at a distance from the edges 218 and 220 of the belt 200. The second area 212 has a width w₁ and may be arranged at the center of the belt 200. However, also an eccentric arrangement may be desired. The second area 212 is arranged at a distance g₁ from the first edge 218 and at a distance g₂ from the second edge 220, wherein the distances g₁ and g₂ may be the same or may be different.

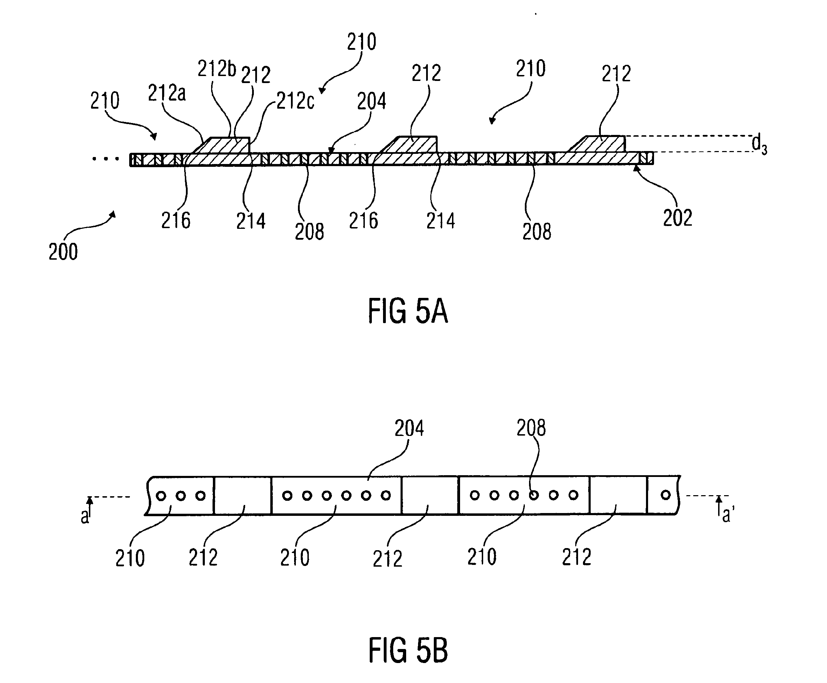

Fig. 5(a) shows a sectional view of a suction belt in accordance with another embodiment taken along a line a-a' shown in Fig. 5(b) which is a top view of the belt. Other than in the embodiment described with regard to Fig. 2, the entire first area 210 comprises the holes 208, i.e. there is no area 210₂.

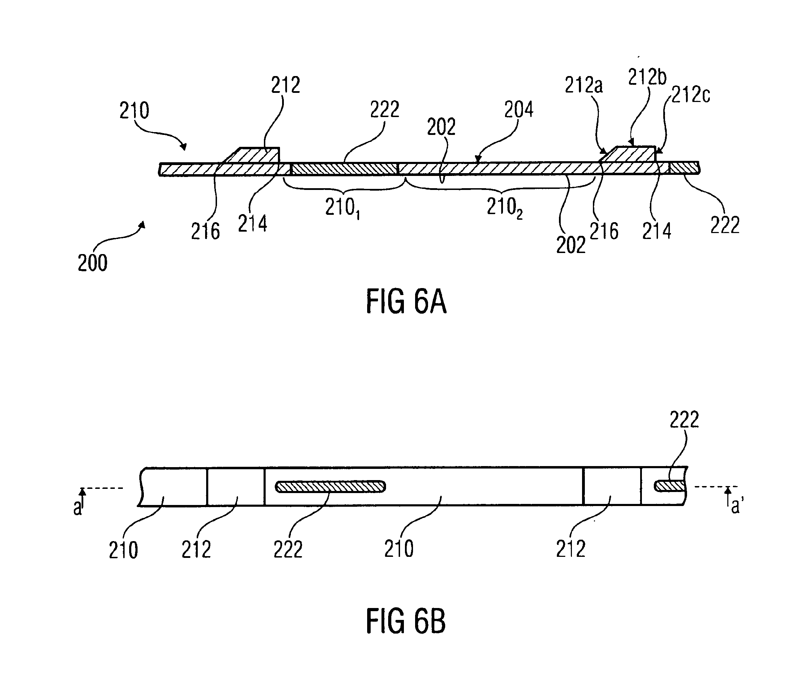

Fig. 6(a) shows a sectional view of a suction belt in accordance with yet another embodiment taken along a line a-a' shown in Fig. 6(b) which is a top view of the belt. Other than in the embodiments described thus far, instead of providing a number of holes arranged along the longitudinal extension of the suction belt 200, a longitudinal slot or slit 222 is formed that extends from the bottom side 202 to the top side 204.

In the embodiments described with regards to Figs. 2 to 6 the second area 212 has a first linearly upward extending part 212a (see Fig. 5(a)), a second, horizontal part 212b, and a third, vertical part 212c. Instead of such a ramp-shaped part or elevation, also other shapes may be used.

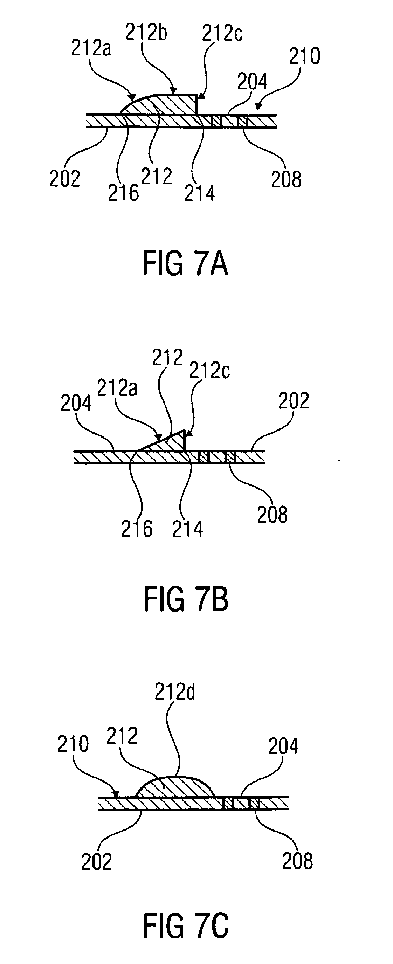

Fig. 7(a) shows the second area 212 comprising a first part 212a that starts to rise or ascend from the second transition 216 upwards in a curved or bend shape until it reaches the second, horizontal part 212b. At the first transition 214 a third, vertical part 212c follows. Fig. 7(b) shows a further embodiment having a first part 212a linearly extending upward from the second transition 216 to the first transition 214, where the vertical part 212c follows. This ramp does not have a horizontal part 212b. Instead of the linear part 212a, also a curved part may be used. Fig. 7(c) shows yet another embodiment of the second area 212 having a curved surface 212d.

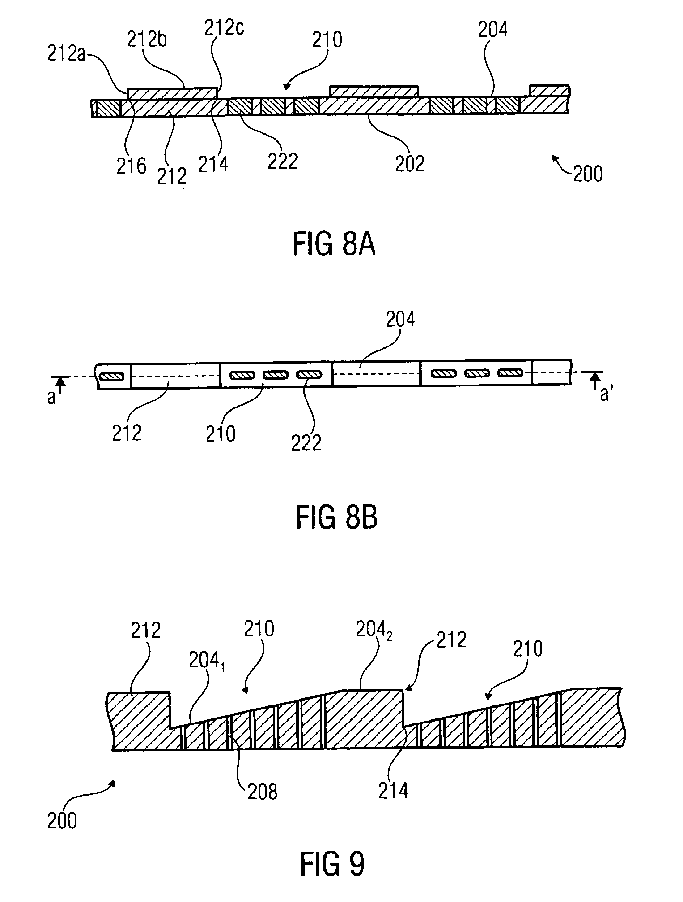

Another embodiment of the suction belt will now described with reference to Fig. 8 in which the second areas 212 comprise a first, vertical part 212a extending upwardly at the second transition 216, a horizontal part 212b followed by a second vertical part 212c at the first transition 214. Further, from the embodiment of Fig. 8 it is clear that the suction belt is not limited to openings having the shape of holes 208 or slits 222, rather, a plurality of slits 222 may be provided. Fig. 8(b) is a top view of the belt 200 and the sectional view of Fig. 8(a) is taken along lines a-a'.

Further it is noted that any combination of holes and slits may be used for realizing the openings for applying a suction force. Also holes or silts arranged side by side in the width direction may be provided.

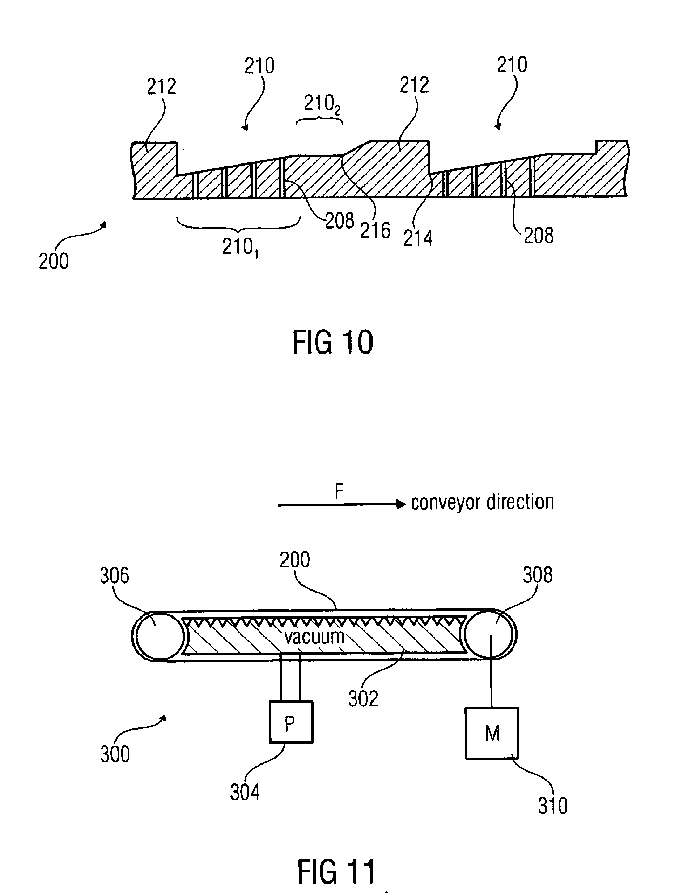

Fig. 9 shows another embodiment of the suction belt in accordance with which the first area 210 has a top side that rises starting from the first transition 214 to the second transition 216 up to the height of the second area 212. Alternatively, as is shown in Fig. 10, the top side of the second area 210 may rise to a first height below the height of the second area. After a horizontal part the top side starts to rise again.

Fig. 11 shows a suction conveyer 300 comprising a vacuum means having a vacuum chamber 302 and a vacuum pump 304. Further, a first roller 306 and a second roller 308 driven by a motor 310 are provided. A suction belt 200 in accordance with embodiments of the invention extends around the two rollers 306 and 308, and the vacuum chamber 302 applies a suction force to the openings 208 of the suction belt 200 for holding an object transported by the belt 200.

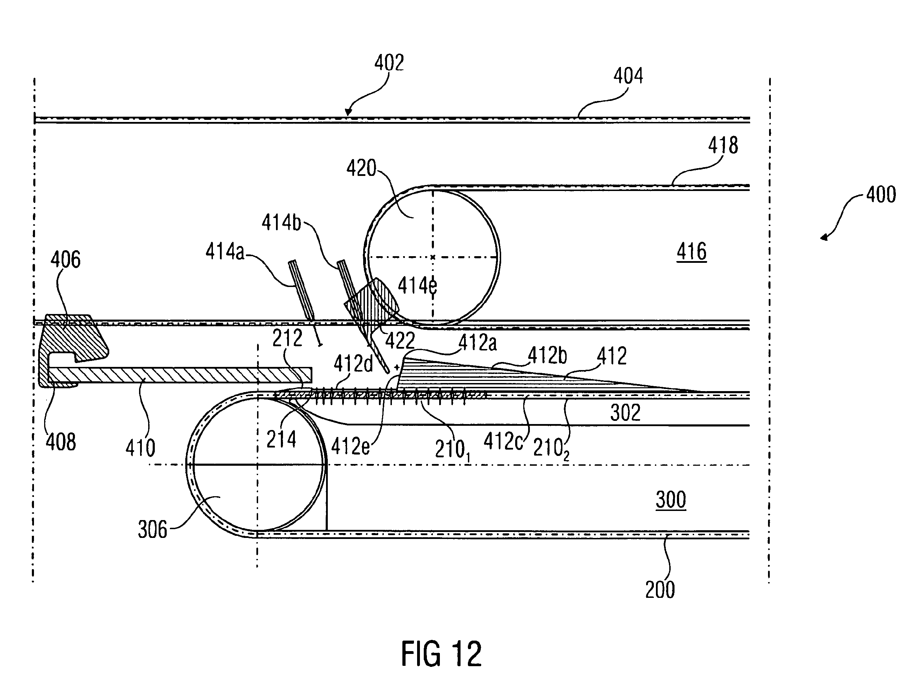

Fig. 12 shows a schematic view of a section of an inserter 400 comprising the suction conveyor 300 of Fig. 11 for transporting an envelope or cover along an inserting or filling path. The suction conveyor 300 comprises a suction belt 200 in accordance with embodiments of the invention. The inserter 400 further comprises a goods transport 402 comprising a belt or a chain 404 extending around respective rollers (not shown). One or more pushers 406 are mounted to the belt 404. The pushers 406 are provided for engaging with a trailing edge 408 of an object 410 to be inserted into an envelope 412 moved by the suction conveyor 300. The suction conveyor 300 moves the envelope 412 with a velocity that is slower than the velocity of the goods transport 402 so that along the inserting or filling path the object 410 will eventually be inserted into the envelope 412. The inserter 400 further comprises air nozzles 414a, 414b which blow air towards the envelope 412 for opening it. Further, a separating device 416 is provided which comprises a belt or chain 418 arranged above the suction conveyor 300 and extending around two roller (of which only one roller 420 is shown in Fig. 12). One or more separating elements 422 are mounted to the belt 418 and are provided to engage with a trailing edge 412a of a first side 412b of the envelope 412 and to maintain the first side 412b separated from a second side 412c of the envelope 412. By means of the belt 418 the separating element 414 is moved together with the envelope 412 so that the separation is maintained over at least a part of the filling path (e.g. at least until a leading edge of the object 410 is arranged inside the envelope 412).

The envelope 412 is arranged on the suction belt 200 in its first area 210 with its second side 412c in contact with the suction belt 200, more specifically, a part of the second side 412c of the envelope 412 is arranged on the second part 210₂ having no holes. Another part of the second side 412c to which an envelope flap 412d is arranged on the first part 210₁ of the belt 200 having the holes. As can be seen, the envelope 412 is placed on the suction belt 200 such that a trailing edge of the flap 412d is arranged at the transition 214. The thickness of the suction belt 200 in the second area 212 is such that the distance d₃ (see Fig. 2 - the height of the upper side 204₂ of the second area 210 above the upper side 204₁ of the first area 210) equals at least the thickness of the flap 412d. In accordance with embodiments the distance d₃ is less than a maximum opening of an envelope throat 412e during the filling process. In any case the height d₃ is selected such that the object 410 is raised from the transport level of the envelope 412 so that it securely passes the flap 412d on its way into the envelope.

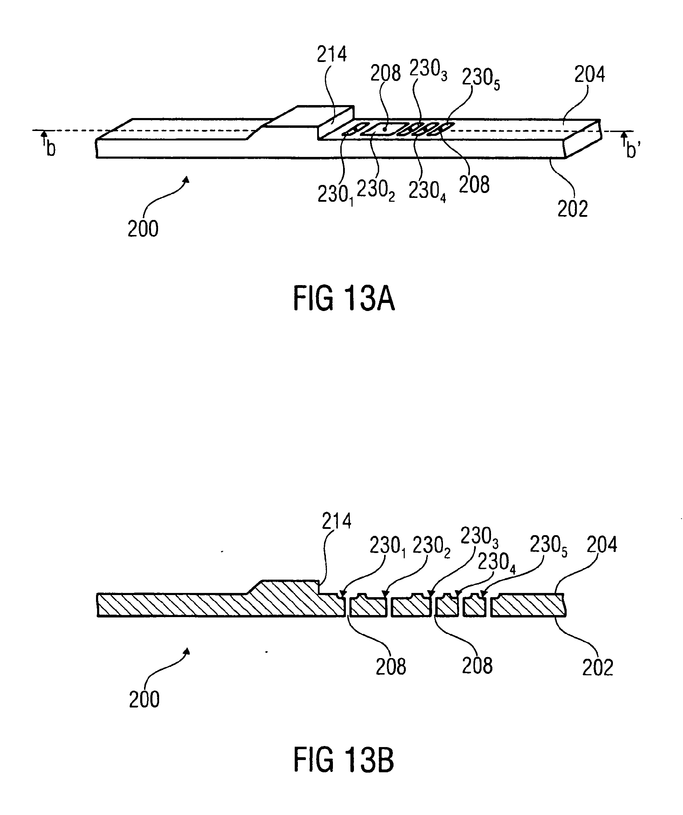

In the embodiments described so far the suction belt included the holes, the diameter of which defined respective suction areas, i.e., an area in which a suction force can be applied through the hole to an object on the belt. However, the invention is not limited to this kind of suction areas. Fig. 13 shows a suction belt in accordance with further embodiments of the invention, wherein Fig. 13(a) is an isometric view of a part of the belt, and Fig. 13(b) is a sectional view along the line b-b' in Fig. 13(a). The suction belt 200 comprises the holes 208 extending from the bottom side 202 of the suction belt 200 to its top side 204. The top side 204 comprises shallow portions 230₁ to 230₅, e.g. shallow recesses or shallow cups. In accordance with embodiments small shallow recesses are provided having a width along the width direction of the belt 200 and a length along the longitudinal direction of the belt 200, wherein the width is greater than the length, see e.g. recesses 230₁, 230₃, 230₄, and 230₅. In accordance with other embodiments large recesses are provided having a length greater than a width, see e.g. recesses 230₂. In accordance with embodiments the belt 200 comprises only small recesses, only large recesses or both small and large recesses. The holes 208 extend from the bottom side to the recesses. As can be seen from Fig. 13, in accordance with embodiments, a shallow recess may have a diameter that is larger than a diameter of a hole 208 connected thereto. One or more holes may be provided at the center of the recess or at another part of the recess. In accordance with these embodiments the suction area is greater than the diameter of the hole. The suction area is defined by the recess formed in the top side of the belt. It is noted that Fig. 13 shows that each recess is provided with one hole. However, other embodiments may comprise at least one recess including two or more holes.

In accordance with the embodiment depicted in Fig. 13, when using the belt to transport envelopes, a combination of one large recess and a plurality of small recesses is used, wherein the large recess 230₂ is provided for applying a suction force greater than normal to the envelope flap, and which is greater than a suction force provided by a small recess. By arranging the large recess at a predetermined position along the belt, it is possible to apply the higher suction force to a desired area of an object on the belt. For example, in case of transporting an envelope, the large recess 230₂ is provided close to the first transition 214, preferably with one small recess 230₁ between the large recess 230₂ and the transition 214. It is noted that dependent on the circumstances also more than one small recess may be provided between the large recess 230₂ and the transition 214. In accordance with other embodiments no small recesses may be provided between the large recess 230₂ and the transition 214, i.e., the large recess is arranged at a distance from the transition 214 that may be set dependent from the dimension of the envelopes to be handled.

The above described embodiments are merely illustrative for the principles of the present invention. It is understood that modifications and variations of the arrangements and the details described herein will be apparent to others skilled in the art. It is the intent, therefore, to be limited only by the scope of the impending patent claims and not by the specific details presented by way of description and explanation of the embodiments herein.

## Claims

1. A suction belt (200) for conveying an envelope (412) having an envelope front side (412c), an envelope back side (412b) and an envelope flap (412d) at the envelope front side, the suction belt comprising:
a first area (210) configured to allow applying a suction force to at least a part of the envelope; and
a second area (212) which is arranged adjacent to the first area (210),
wherein a thickness of the suction belt (200) changes at a transition (214) from the first area (210) to the second area (212),
**characterized in that**
the envelope (412) is arranged on the suction belt (200) such that its envelope flap (412d) is arranged on the first area (210) adjacent to the second area (212), so that during a filling process one or more goods to be inserted into the envelope (412) pass the second area (212) without colliding with the envelope flap (412d).

2. The suction belt (200) of claim 1, comprising a top side (204) and a bottom side (202), wherein the top side (204₁) of the first area (210) is at least partially below the top side (204₂) of the second area (212).

3. The suction belt (200) of claim 1 or 2, wherein the second area (212) comprises a first, upwardly rising partial part (212a), a second, horizontal partial part (212b) and a third, vertical partial part (212c).

4. The suction belt (200) of claim 1 or 2, wherein the second area (212) comprises a first, upwardly rising partial part (212a) and a second, vertical partial part (212c).

5. The suction belt (200) of one of claims I to 4, wherein the first area (210) comprises one or more openings (208, 222) extending from a bottom side (202) of the suction belt (200) to a top side (204) of the suction belt (200), wherein a suction force can be applied through the one or more openings (208, 222) to the envelope arranged on the first area (210).

6. The suction belt (200) of one of claims 1 to 5, wherein at least two first areas (210) and at least two second areas (212) are arranged alternately along the longitudinal direction of the suction belt (200).

7. The suction belt (200) of one of claims 1 to 6, wherein the envelope (412) is moved during the filling process, or wherein the envelope (412) is stopped during the filling process.

8. The suction belt (200) of one of claims 1 to 7, wherein the transition between the first area (210) and the second area (212) comprises a step or a ledge.

9. The suction belt (200) of one of claims I to 8, comprising one or more shallow recesses (230₁-230₅) formed in the top side (204) of the suction belt (200), wherein the respective openings (208) extend from the bottom side (202) of the suction belt (200) to the respective recesses (230₁-230₅).

10. The suction belt (200) of claim 9, wherein the shallow recess (230₁-230₅) is larger than a diameter of one or more holes (208) connected the recess.

11. The suction belt (200) of claim 9 or 10, wherein the one or more shallow recesses (230₁-230₅) comprise small and/or large recesses, wherein a small recess (230₁, 230₃-230₅) has a width along the width direction of the suction belt (200) greater than a length along the longitudinal direction of the suction belt (200), and wherein a large recess (230₂) has a length along the longitudinal direction of the suction belt (200) greater than a width along the width direction of the suction belt (200).

12. The suction belt (200) of claim 11, comprising a large recess (230₂) arranged adjacent to the transition (214) from the first area (210) to the second area (212) with a small recess (230₁) arranged between the transition (214) and the large recess (230₂).

13. A suction conveyor (300), comprising:
vacuum means (302, 304),
a first, driven roller (308),
a second roller (306), and
a suction belt (200) of one of claims 1 to 12 extending around the first roller (308) and around the second roller (306),
wherein the vacuum means (302, 304) is arranged to provide a suction force to be applied to the envelope (412) arranged on the first area (210) of the suction belt (200).

## Patentansprüche

1. Ein Saugband (200) zum Befördern eines Umschlags (412), der eine Umschlagsvorderseite (412c), eine Umschlagsrückseite (412b) und eine Umschlagslasche (212d) auf der Umschlagsvorderseite aufweist, wobei das Saugband folgende Merkmale aufweist:
einen ersten Bereich (210), der dazu konfiguriert ist, ein Ausüben einer Saugkraft auf zumindest einen Teil des Umschlags zu ermöglichen; und
einen zweiten Bereich (212), der neben dem ersten Bereich (210) angeordnet ist,
wobei eine Dicke des Saugbandes (200) an einem Übergang (214) von dem ersten Bereich (210) zu dem zweiten Bereich (212) wechselt,
**dadurch gekennzeichnet, dass**
der Umschlag (412) derart auf dem Saugband (200) angeordnet ist, dass seine Umschlagslasche (412d) auf dem neben dem zweiten Bereich (212) befindlichen ersten Bereich (210) angeordnet ist, so dass während eines Füllvorgangs ein oder mehrere Güter, die in den Umschlag (412) einzufügen sind, den zweiten Bereich (212) passieren, ohne mit der Umschlagslasche (412d) zu kollidieren.

2. Das Saugband (200) gemäß Anspruch 1, das eine Oberseite (204) und eine Unterseite (202) aufweist, wobei die Oberseite (204₁) des ersten Bereichs (210) zumindest teilweise unter der Oberseite (204₂) des zweiten Bereichs (212) liegt.

3. Das Saugband (200) gemäß Anspruch 1 oder 2, bei dem der zweite Bereich (212) einen ersten, nach oben ansteigenden Teilabschnitt (212a), einen zweiten, horizontalen Teilabschnitt (212b) und einen dritten, vertikalen Teilabschnitt (212c) aufweist.

4. Das Saugband (200) gemäß Anspruch 1 oder 2, bei dem der zweite Bereich (212) einen ersten, nach oben ansteigenden Teilabschnitt (212a) und einen zweiten, vertikalen Teilabschnitt (212c) aufweist.

5. Das Saugband (200) gemäß einem der Ansprüche 1 bis 4, bei dem der erste Bereich (210) eine oder mehrere Öffnungen (208, 222) aufweist, die sich von einer Unterseite (202) des Saugbandes (200) zu einer Oberseite (204) des Saugbandes (200) erstrecken, wobei durch die eine oder die mehreren Öffnungen (208, 222) eine Saugkraft auf den auf dem ersten Bereich (210) angeordneten Umschlag ausgeübt werden kann.

6. Das Saugband (200) gemäß einem der Ansprüche 1 bis 5, bei dem zumindest zwei erste Bereiche (210) und zumindest zwei zweite Bereiche (212) abwechselnd entlang der Längsrichtung des Saugbandes (200) angeordnet sind.

7. Das Saugband (200) gemäß einem der Ansprüche 1 bis 6, bei dem der Umschlag (412) während des Füllvorgangs bewegt wird oder bei dem der Umschlag (412) während des Füllvorgangs angehalten wird.

8. Das Saugband (200) gemäß einem der Ansprüche 1 bis 7, bei dem der Übergang zwischen dem ersten Bereich (210) und dem zweiten Bereich (212) eine Stufe oder einen Absatz aufweist.

9. Das Saugband (200) gemäß einem der Ansprüche 1 bis 8, das eine oder mehrere flache Aussparungen (230₁-230₅) aufweist, die in der Oberseite (204) des Saugbandes (200) gebildet sind, wobei sich die jeweiligen Öffnungen (208) von der Unterseite (202) des Saugbandes (200) bis zu den jeweiligen Aussparungen (230₁-230₅) erstrecken.

10. Das Saugband (200) gemäß Anspruch 9, bei dem die flache Aussparung (230₁-230₅) größer ist als ein Durchmesser eines oder mehrerer Löcher (208), die durch die Aussparung verbunden sind.

11. Das Saugband (200) gemäß Anspruch 9 oder 10, bei dem die eine oder die mehreren flachen Aussparungen (230₁-230₅) kleine und/oder große Aussparungen aufweisen, wobei eine kleine Aussparung (230₁, 230₃-230₅) eine Breite entlang der Breitenrichtung des Saugbandes (200) aufweist, die größer ist als eine Länge entlang der Längsrichtung des Saugbandes (200), und wobei eine große Aussparung (230₂) eine Länge entlang der Längsrichtung des Saugbandes (200) aufweist, die größer ist als eine Breite entlang der Breitenrichtung des Saugbandes (200).

12. Das Saugband (200) gemäß Anspruch 11, das eine große Aussparung (230₂) aufweist, die neben dem Übergang (214) von dem ersten Bereich (210) zu dem zweiten Bereich (212) angeordnet ist, wobei zwischen dem Übergang (214) und der großen Aussparung (230₂) eine kleine Aussparung (230₁) angeordnet ist.

13. Eine Saugfördereinrichtung (300), die folgende Merkmale aufweist:
eine Vakuumeinrichtung (302, 304),
eine erste, angetriebene Rolle (308),
eine zweite Rolle (306), und
ein Saugband (200) gemäß einem der Ansprüche 1 bis 12, das sich um die erste Rolle (308) und um die zweite Rolle (306) herum erstreckt,
wobei die Vakuumeinrichtung (302, 304) dazu angeordnet ist, eine Saugkraft bereitzustellen, die auf den Umschlag (412), der auf dem ersten Bereich (210) des Saugbandes (200) angeordnet ist, ausgeübt werden soll.

## Revendications

1. Courroie à aspiration (200) pour transporter une enveloppe (412) présentant un côté avant d'enveloppe (412c), un côté arrière d'enveloppe (412b) et un rabat d'enveloppe (412d) du côté avant d'enveloppe, la courroie à aspiration comprenant:
une première zone (210) configurée pour permettre d'appliquer une force d'aspiration sur au moins une partie de l'enveloppe, et
une deuxième zone (212) qui est disposée adjacente à la première zone (210),
dans laquelle une épaisseur de la courroie à aspiration (200) change à une transition (214) de la première zone (210) à la deuxième zone (212),
**caractérisée par le fait que**
l'enveloppe (412) est disposée sur la courroie à aspiration (200) de sorte que son rabat d'enveloppe (412d) soit disposée sur la première zone (210) adjacente à la deuxième zone (212), de sorte que, pendant une opération de remplissage, un ou plusieurs produits à insérer dans l'enveloppe (412) passent la deuxième zone (212) sans heurter le rabat d'enveloppe (412d).

2. Courroie à aspiration (200) selon la revendication 1, comprenant un côté supérieur (204) et un côté inférieur (202), où le côté supérieur (204₁) de la première zone (210) se trouve au moins partiellement au-dessous du côté supérieur (204₂) de la deuxième zone (212).

3. Courroie à aspiration (200) selon la revendication 1 ou 2, dans laquelle la deuxième zone (212) comprend une première partie partielle montant vers le haut (212a), une deuxième partie partielle horizontale (212b) et une troisième partie partielle verticale (212c).

4. Courroie à aspiration (200) selon la revendication 1 ou 2, dans laquelle la deuxième zone (212) comprend une première partie partielle montant vers le haut (212a) et une deuxième partie partielle verticale (212c).

5. Courroie à aspiration (200) selon l'une des revendications 1 à 4, dans laquelle la première zone (210) comprend une ou plusieurs ouvertures (208, 222) s'étendant d'un côté inférieur (202) de la courroie à aspiration (200) vers un côté supérieur (204) de la courroie à aspiration (200), dans laquelle une force d'aspiration peut être appliquée à travers une ou plusieurs ouvertures (208, 222) sur l'enveloppe disposée sur la première zone (210).

6. Courroie à aspiration (200) selon l'une des revendications 1 à 5, dans laquelle au moins deux premières zones (210) et au moins deux deuxièmes zones (212) sont disposées alternativement dans la direction longitudinale de la courroie à aspiration (200).

7. Courroie à aspiration (200) selon l'une des revendications 1 à 6, dans laquelle l'enveloppe (412) est déplacée pendant l'opération de remplissage, ou dans laquelle l'enveloppe (412) est arrêtée pendant l'opération de remplissage.

8. Courroie à aspiration (200) selon l'une des revendications 1 à 7, dans laquelle la transition entre la première zone (210) et la deuxième zone (212) comprend un échelon ou un rebord.

9. Courroie à aspiration (200) selon l'une des revendications 1 à 8, comprenant un ou plusieurs évidements peu profonds (230₁ à 230₅) formés dans le côté supérieur (204) de la courroie à aspiration (200), dans laquelle les ouvertures respectives (208) s'étendent du côté inférieur (202) de la courroie à aspiration (200) vers les évidements respectifs (230₁ à 230₅).

10. Courroie à aspiration (200) selon la revendication 9, dans laquelle l'évidement peu profond (230₁ à 230₅) est plus grand qu'un diamètre d'un ou plusieurs trous (208) connectés par l'évidement.

11. Courroie à aspiration (200) selon la revendication 9 ou 10, dans laquelle les un ou plusieurs évidements peu profonds (230₁ à 230₅) comprennent de petits et/ou de grands évidements, dans laquelle un petit évidement (230₁, 230₃ à 230₅) présente une largeur dans le sens de la largeur de la courroie à aspiration (200) plus grande qu'une longueur dans le sens longitudinal de la courroie à aspiration (200), et dans laquelle un grand évidement (230₂) présente une longueur dans le sens longitudinal de la courroie à aspiration (200) supérieure à une largeur dans le sens de la largeur de la courroie à aspiration (200).

12. Courroie à aspiration (200) selon la revendication 11, comprenant un grand évidement (230₂) disposé adjacent à la transition (214) de la première zone (210) à la deuxième zone (212) avec un petit évidement (230₁) disposé entre la transition (214) et le grand évidement (230₂).

13. Transporteur à aspiration (300), comprenant:
un moyen à vide (302, 304),
un premier rouleau entraîné (308),
un deuxième rouleau (306), et
une courroie à aspiration (200) selon l'une des revendications 1 à 12 s'étendant autour du premier rouleau (308) et autour du deuxième rouleau (306),
dans lequel le moyen à vide (302, 304) est aménagé de manière à fournir une force d'aspiration à appliquer à l'enveloppe (412) disposée sur la première zone (210) de la courroie à aspiration (200).
